# EUROPÄISCHE PATENTANMELDUNG

(11) **EP 3 192 578 A2**
(43) Veröffentlichungstag der Anmeldung: **19.07.2017**
(21) Anmeldenummer: 16206082.6
(22) Anmeldetag: 22.12.2016
(51) Int. Cl.: B01D 39/12, F24C 15/20

(54) **FILTEREINHEIT FÜR DUNSTABZUGSHAUBE**

(30) Priorität: 13.01.2016 DE 102016200320
(71) Anmelder: BSH Hausgeräte GmbH, 81739 München (DE)
(72) Erfinder: Schopp, Daniel, 74348 Lauffen (DE); Metz, Daniel, 76689 Karlsdorf-Neuthard (DE)

(57) **Zusammenfassung**

Die vorliegende Erfindung betrifft eine Filtereinheit für eine Dunstabzugshaube, die mindestens zwei Filterlagen (10, 11, 12, 13, 14) aufweist. Die Filterlage ist, dadurch gekennzeichnet, dass mindestens zwei der Filterlagen (10, 11, 12, 13, 14) Maschenlagen (13) darstellen, die aus mindestens einem Metallfaden (131) bestehen.

## Beschreibung

Die vorliegende Erfindung betrifft eine Filtereinheit für eine Dunstabzugshaube.

Bei Dunstabzugshauben werden als Filtereinheiten insbesondere Filterkassetten verwendet, um aus dem Wrasen, der durch die Dunstabzugshaube angesaugt wird, Verunreinigungen, insbesondere Fettpartikel abzuscheiden. Diese Filtereinheiten werden daher auch als Fettfilter bezeichnet.

Die Filtereinheiten sind an der Dunstabzugshaube lösbar befestigt, so dass diese von der Dunstabzugshaube zu Reinigungszwecken getrennt werden können. Die Filtereinheiten können als Metallfilter ausgebildet sein. Solche Metallfilter umfassen in der Regel mehrere Lagen aus Streckmetall. So werden Metallfilter eingesetzt, bei denen beispielsweise drei bis zwölf Lagen Streckmetall übereinander gestapelt eingesetzt werden. Die größere Anzahl der Lagen ist notwendig, um eine ausreichende Speicherkapazität des Filterelementes für Verunreinigungen zu schaffen.

Ein Nachteil bekannter Filtereinheiten ist, dass durch die größere Anzahl von Streckmetalllagen, die notwendig sind, um eine ausreichende Speicherkapazität zur Verfügung stellen zu können, die Filterwirkung aufgrund des Strömungswiderstandes der einzelnen Lagen verringert ist.

Aufgabe der vorliegenden Erfindung ist es daher, eine Filtereinheit zu schaffen, bei der eine gute Filterwirkung bei gleichzeitig guter Speicherkapazität der Filtereinheit gewährleistet ist.

Der Erfindung liegt die Erkenntnis zugrunde, dass diese Aufgabe durch Verwendung von Filterlagen gelöst werden kann, bei denen zum einen eine große Anzahl an Zwischenräumen gegeben ist und zum anderen die Anzahl an Materialenden minimiert ist.

Erfindungsgemäß wird die Aufgabe gelöst durch eine Filtereinheit für eine Dunstabzugshaube, die mindestens zwei Filterlagen aufweist. Die Filtereinheit ist dadurch gekennzeichnet, dass mindestens zwei der Filterlagen Maschenlagen darstellen, die aus mindestens einem Metallfaden bestehen.

Die Filtereinheit wird im Folgenden auch als Filterelement, Filterkassette oder Fettfilter bezeichnet. Die Filtereinheit stellt vorzugsweise eine Filtereinheit dar, die an einer Ansaugöffnung einer Dunstabzugshaube lösbar befestigt werden kann.

Die Filtereinheit weist erfindungsgemäß mindestens zwei Filterlagen auf. Als Filterlagen werden hierbei Lagen oder Schichten in der Filtereinheit bezeichnet, die in der Filtereinheit aufeinander liegen, das heißt gestapelt sind und die nacheinander von anströmenden Wrasen durchströmt werden. Die Filterlagen können vor dem Zusammenbau der Filtereinheit als separate Elemente vorliegen.

Die Filtereinheit ist dadurch gekennzeichnet, dass mindestens zwei der Filterlagen Maschenlagen darstellen. Als Maschenlagen werden Filterlagen bezeichnet, bei denen die Öffnungen in der Lage Maschen jeweils durch eine Schlinge aus mindestens einem Metallfaden gebildet werden. Die Schlingen sind in andere Schlingen der Maschenlage eingehängt und sind vorzugsweise durch vier Bindungsstellen aneinander angebunden. Somit unterscheidet sich die erfindungsgemäße Maschenlage von Streckmetalllagen, bei denen die Öffnungen durch Metallstege eines Bleches begrenzt sind. Die Maschen in dem Material der Maschenlage werden auch als Öffnungen bezeichnet.

Die Maschenlage besteht erfindungsgemäß aus mindestens einem Metallfaden. Vorzugsweise wird die Maschenlage durch mindestens einen Metallfaden gebildet, der einen über die Länge der Maschenlage durchgehenden Metallfaden darstellt. Allerdings können erfindungsgemäß auch mehr als ein Metallfaden nebeneinander geführt werden und gemeinsam jeweils zu Maschen verarbeitet werden. Vorzugsweise besteht die Maschenlage über die Länge der Maschenlage aus einem oder mehreren jeweils durchgehenden Metallfäden. Lediglich an den Längsenden eines Metallfadens kann dieser mit dem Längsende eines weiteren Metallfadens verbunden sein.

Der Metallfaden aus dem die Maschenlage hergestellt ist, kann auch als Draht bezeichnet werden. Der Fadenverlauf des Metallfadens erstreckt sich vorzugsweise zumindest bereichsweise in der Breitenrichtung. Somit werden die Maschen der Maschenlage vorzugsweise durch einen Metallfaden, der in Breitenrichtung und in Längsrichtung der Maschenlage geführt ist, gebildet. Werden mehrere Metallfäden verwendet, so werden diese nebeneinander geführt und bilden gemeinsam jeweils mindestens eine Masche.

Die Verwendung von Maschenlagen als Filterlagen weist eine Reihe von Vorteilen auf. Zum einen ist durch die Begrenzung der Maschen durch Fäden die Anzahl der Zwischenräume in der Filterlage gegenüber einer Streckmetalllage erhöht. Zur Bildung der Maschen muss nämlich der Metallfaden um sich selber oder um einen anderen Metallfaden gelegt oder gefädelt werden. Somit ist entlang des Verlaufes des Metallfadens zwischen verschiedenen Bereichen des Metallfadens jeweils ein Zwischenraum geschaffen, der zusätzlich zu der Oberseite und Unterseite der Filterlage zur Aufnahme und Speicherung von Verunreinigungen, wie beispielsweise Fett dienen kann. Zudem kann durch diese Zwischenräume auch ein Durchströmen der Luft gefördert werden, wodurch die Filterwirkung weitere verbessert wird. Schließlich weist die Verwendung von Maschenlagen als Filterlagen den Vorteil auf, dass diese auf einfache Weise hergestellt werden können.

Zudem ist bei Maschenlagen, die Anzahl von Fadenenden, die in der Filterlage vorliegen, begrenzt. Insbesondere liegen bei dieser Ausführungsform lediglich an den Rändern der Maschenlage ein oder mehrere Fadenenden vor. Insbesondere liegen in der Fläche der Maschenlage vorzugsweise keine Fadenenden vor. Die Abwesenheit von Fadenenden ist zum einen vorteilhaft, da über Fadenenden, wie diese beispielsweise bei Vliesmaterial vorliegen, Verunreinigungen einfach aus der Filterlage austreten können. Zudem ist die Verletzungsgefahr für den Benutzer bei einer geringeren Anzahl an Fadenenden ebenfalls verringert.

Indem mindestens zwei Maschenlagen als Filterlagen verwendet werden, kann zum einen die Herstellung der Filtereinheit vereinfacht werden, was später genauer erläutert wird, und zum anderen kann die Speicherkapazität der Filtereinheit für Verunreinigungen weiter gesteigert werden. Verunreinigungen, die in der Filtereinheit gespeichert werden, sind insbesondere flüssige Verunreinigungen, wie Fett oder Kondenswasser. Allerdings können mit der erfindungsgemäßen Filtereinheit auch feste Verunreinigungen, wie beispielsweise Staub ausgefiltert werden und an der Filtereinheit anhaften.

Gemäß einer bevorzugten Ausführungsform sind die zwei Maschenlagen aus einem Schlauch geformt. Bei dieser Ausführungsform kann das Material der Maschenlage, das heißt das Maschengebilde in Runden hergestellt werden. Durch radiales Zusammendrücken des Schlauches können dann aus dem runden Schlauch zwei ebene Maschenlagen erzeugt werden, die jeweils aus dem Material eines Halbkreises des Schlauchs bestehen. Beispielsweise kann somit ein länglicher Schlauch in dieser Art zusammengedrückt werden, wobei die offenen Enden des Schlauches beispielsweise die Längsenden der Maschenlagen bilden. In diesem Fall sind die Seitenränder der zwei Maschenlagen miteinander verbunden, das heißt die beiden Maschenlagen gehen ineinander über. Die zwei Maschenlagen werden vorzugsweise aus einem einzigen Schlauch hergestellt.

Die Herstellung der Maschenlagen durch einen Schlauch weist eine Reihe von Vorteilen auf. Zum einen ist die Herstellung der Maschenlagen vereinfacht, da das Material der zwei Maschenlagen durch die Herstellung eines einzigen Schlauches bereitgestellt wird. Zudem ist bei dieser Ausführungsform, die Anzahl von Fadenenden, die in der Maschenlage vorliegen, begrenzt. Insbesondere liegen bei dieser Ausführungsform lediglich an den Längsenden des Schlauches ein oder mehrere Fadenenden vor. An den seitlichen Rändern der Maschenlagen existieren hingegen keinen Fadenenden. Die Abwesenheit von Fadenenden ist zum einen vorteilhaft, da über Fadenenden, wie diese beispielsweise bei Vliesmaterial vorliegen, Verunreinigungen einfach aus der Filterlage austreten können. Zudem ist die Verletzungsgefahr für den Benutzer bei einer geringeren Anzahl an Fadenenden ebenfalls verringert. Weiterhin kann aufgrund der Tatsache, dass zwei aus einem Schlauch durch zerstörungsfreies Umformen des Schlauches gebildete Maschenlagen an deren Rändern ineinander übergehen, eine Verteilung von Verunreinigungen, insbesondere ein Ableiten von Verunreinigungen von einer Maschenlage in die andere im eingebauten Zustand der Maschenlagen in der Filtereinheit gewährleistet werden. Schließlich ist bei der Ausführungsform, bei der die zwei Maschenlagen aus einem Schlauch durch zerstörungsfreies Umformen gefertigt sind, auch an den Seitenrändern der Maschenlagen ein Herunterfallen von Fasern aus der Filterlage nicht zu befürchten, wie diese beispielsweise bei Metallfasermaterial der Fall ist. Als zerstörungsfreies Umformen wird insbesondere ein Biegen, Drücken oder Pressen des Schlauches verstanden. Ein Schneiden oder anderes zerstörendes Umformen des Schlauches wird vorzugsweise nicht ausgeführt, insbesondere nicht in der Längsrichtung des Schlauches. An den Längsenden kann hingegen der Schlauch abgeschnitten werden, um die gewünschte Länge der Maschenlage einstellen zu können.

Die mindestens zwei Maschenlagen können in der Filtereinheit so angeordnet werden, dass zwischen diesen mindestens eine weitere Filterlage aufgenommen ist. Bei der Ausführungsform, bei der die zwei Maschenlagen durch einen Schlauch erzeugt werden, kann beispielsweise eine weitere Filterlage in den Schlauch eingebracht werden. Bei anderen Ausführungsformen, bei denen die mindestens zwei Maschenlagen als getrennte Filterlagen vorliegen, können die weitere Filterlage oder die weiteren Filterlagen zwischen die Maschenlagen gelegt werden.

Gemäß einer bevorzugten Ausführungsform liegen die zwei Maschenlagen aneinander an. Die Maschenlagen liegen hierbei in dem in der Filtereinheit eingebrachten Zustand aneinander an. Vor dem Zusammenbau der Filtereinheit können die Maschenlagen aber zumindest bereichsweise voneinander beabstandet sein. Dies kann beispielsweise bei einer Herstellung zweier Maschenlagen aus einem Schlauch der Fall sein.

Der Vorteil der Ausführungsform, bei der die Maschenlagen aneinander anliegen, weist eine Reihe von Vorteilen auf. Zum einen ist die Herstellung beispielsweise durch einfaches Abflachen oder Zusammendrücken eines Schlauches in radialer Richtung auf einfache Weise möglich. Zudem können bei dieser Ausführungsform Verunreinigungen, die in einer der Maschenlagen aufgenommen wurden, dort aber nicht mehr gehalten werden können, in der weiteren, benachbarten, das heißt anliegenden Maschenlage aufgenommen und dort gespeichert werden.

Gemäß einer Ausführungsform weist der Metallfaden der Maschenlagen einen abgeflachten Querschnitt auf. Der Querschnitt kann beispielsweise oval oder rechteckig sein. Durch Verwendung eines Metallfadens mit abgeflachtem Querschnitt werden die durch den oder die Metallfäden gebildeten Zwischenräume vergrößert und somit die Speicherkapazität gegenüber einem Metallfaden mit rundem Querschnitt vergrößert.

Gemäß einer bevorzugten Ausführungsform stellt die Maschenlage eine Innenlage dar. Als Innenlage der Filtereinheit wird erfindungsgemäß eine Lage bezeichnet, an der an sowohl der Oberseite als auch der Unterseite eine weitere Filterlage der Filtereinheit anliegt. Als Außenlage hingegen wird eine Filterlage bezeichnet, die nur an einer Seite, das heißt der Oberseite oder der Unterseite an einer weiteren Filterlage der Filtereinheit anliegt. Indem die Maschenlage als Innenlage verwendet wird, kann der Vorteil erzielt werden, dass an die Maschenlage nur geringe oder keine Anforderungen hinsichtlich Stabilität gestellt werden müssen. Daher kann als Metallfaden für die Maschenlage ein Metallfaden mit kleinerem Querschnitt verwendet werden. Alternativ kann bei der Ausführungsform, bei der mehrere Metallfäden nebeneinander geführt werden, die Anzahl der Metallfäden verringert werden. Die Stabilität, die bei der erfindungsgemäß vorzugsweise flächigen Filtereinheit notwendig ist, um ein Herunterhängen oder Herausfallen der Maschenlage zu verhindern kann bei der Ausführungsform, bei der die Maschenlage eine Innenlage darstellt, durch eine an die Innenlage angrenzende weitere Filterlage erfüllt werden. Beispielsweise kann an der Maschenlage eine Streckmetalllage angelegt sein, die eine Außenlage oder eine weitere Innenlage darstellt. Eine Streckmetalllage weist eine höhere Stabilität als eine Maschenlage auf und kann dadurch die Maschenlage stützen. Ein weiterer Vorteil der Verwendung der Maschenlage als Innenlage besteht darin, dass diese für den Benutzer nicht unmittelbar einsehbar ist. Als Außenlage, die an der Maschenlage anliegt, kann beispielsweise eine Streckmetalllage oder ein Lochblech verwendet werden. Durch diese Außenlagen wird dann nur ein Teil der Fläche der Maschenlage sichtbar.

Die Maschenlage kann erfindungsgemäß an zumindest einer Seite eloxiert sein. Diese Ausführungsform ist beispielsweise für Filtereinheiten von Vorteil, bei denen die Maschenlage an einer Außenlage anliegt und daher zumindest bereichsweise sichtbar für den Benutzer ist.

Die Maschenlagen der erfindungsgemäßen Filtereinheit können Stricklagen, Häckellagen und/oder Wirklagen sein. Dabei können die mindestens zwei Maschenlagen in der Filtereinheit durch das gleiche Herstellungsverfahren hergestellt sein oder durch unterschiedliche Herstellungsverfahren hergestellt sein. Im ersten Fall können die mindestens zwei Maschenlagen beispielsweise Stricklagen sein, während im zweiten Fall beispielsweise eine Maschenlage eine Stricklage und eine weitere Maschenlage eine Wirklage sein kann.

Der Metallfaden, aus dem die Maschenlage hergestellt wird, kann beispielsweise aus Aluminium oder Edelstahl bestehen. Diese Materialien lassen sich einfach in Maschenform bringen. Zudem sind die Materialien hitzebeständig und können einfach gereinigt werden.

Gemäß einer bevorzugten Ausführungsform sind die Filterlagen der Filtereinheit an deren Rändern in einem Rahmen gehalten. Der Rahmen umgreift hierbei die Filterlagen vorzugsweise nur im äußeren Randbereich, da dadurch die Filterfläche weiterhin ausreichend groß ist. Indem die Filterlagen in einem Rahmen gehalten werden, der beispielsweise aus Edelstahl bestehen kann, ist eine zusätzliche Verbindung der einzelnen Lagen der Filtereinheit untereinander, beispielsweise ein Verkleben oder Verschweißen nicht zwingend erforderlich. Hierdurch wird insbesondere die Herstellung vereinfacht. Der Rahmen sorgt bei der erfindungsgemäßen Filtereinheit zudem dafür, dass die Ränder der einzelnen Filterlagen nach außen abgedeckt sind. Somit kann ein Austritt von Verunreinigungen über die Ränder der Filterlagen verhindert werden. Zudem wird die Verletzungsgefahr für den Benutzer verringert, da die Ränder von Filterlagen, die in der Regel scharf sind, von dem Rahmen abgedeckt werden. Ein Entgraten der Ränder zum Schutz des Benutzers ist bei der Ausführungsform, bei der die Filterlagen in einem Rahmen gehalten werden, nicht erforderlich, wodurch sich die Herstellung der Filtereinheit weiter vereinfacht.

Zur Vereinfachung der Herstellung und für den sicheren Halt können die Ränder der Filterlagen vordem Einbringen in den Rahmen miteinander verpresst werden. Insbesondere können die Außenlagen, die insbesondere Decklagen darstellen können, und Innenlagen miteinander verpresst werden. Neben der Sicherung der relativen Position der Filterlagen zueinander bei der Herstellung und der Handhabung der Filtereinheit weist ein solches Verpressen den Vorteil auf, dass die Dicke des Filterlagenstapels an den Rändern verringert werden kann. Beispielsweise können die Filterlagen so miteinander verpresst werden, dass die Höhe des Filterlagenstapels 8mm beträgt. Mit dieser Höhe können die Filterlagen in einen herkömmlichen Rahmen aufgenommen werden und die erfindungsgemäße Filtereinheit kann ohne bauliche Änderung der Dunstabzugshaube als Ersatz für eine herkömmliche Filterkassette verwendet werden. Über die Fläche des Filterlagenstapels kann die Höhe des Filterlagenstapels aber auch höher sein als die Höhe des Rahmens.

Die erfindungsgemäße Filtereinheit kann zusätzlich zu den mindestens zwei Maschenlagen mindestens eine Decklage, mindestens eine Streckmetalllage und/oder mindestens eine ondulierte Filterlage aufweisen. Als Decklage wird hierbei eine Filterlage bezeichnet, die eine Außenlage der Filtereinheit darstellt und beispielsweise an einer Außenseite oberflächenbehandelt, beispielsweise eloxiert ist oder auf andere Weise eine Oberfläche aufweist, die das optische Erscheinungsbild verbessert, beispielsweise ein Lochblech. Die Decklage kann eine Streckmetalllage sein. Weiterhin kann die Filtereinheit mindestens eine Streckmetalllage als Innenlage aufweisen. Die Streckmetalllagen können flach oder onduliert vorliegen. Durch das Ondulieren einer Streckmetalllage werden deren Fläche und damit auch die Speicherkapazität dieser Filterlage vergrößert.

Die Erfindung wird im Folgenden erneut anhand der beiliegenden Figuren beschrieben. Es zeigen:
- Figur 1:: eine schematische perspektivische Ansicht einer Ausführungsform der erfindungsgemäßen Filtereinheit;
- Figur 2:: eine schematische Darstellung des Aufbaus einer Ausführungsform der erfindungsgemäßen Filtereinheit;
- Figur 3:: eine schematische Darstellung eines Maschenschlauches;
- Figur 4:: eine schematische Darstellung der Reihenfolge von Filterlagen in einer weiteren Ausführungsform der erfindungsgemäßen Filtereinheit;
- Figur 5:: eine schematische Darstellung der Reihenfolge von Filterlagen in einer weiteren Ausführungsform der erfindungsgemäßen Filtereinheit;
- Figur 6:: eine schematische Darstellung der Reihenfolge von Filterlagen in einer weiteren Ausführungsform der erfindungsgemäßen Filtereinheit;
- Figur 7:: eine schematische Darstellung der Reihenfolge von Filterlagen in einer weiteren Ausführungsform der erfindungsgemäßen Filtereinheit; und
- Figur 8:: eine schematische Darstellung einer Ausführungsform von Maschen der Maschenlage.

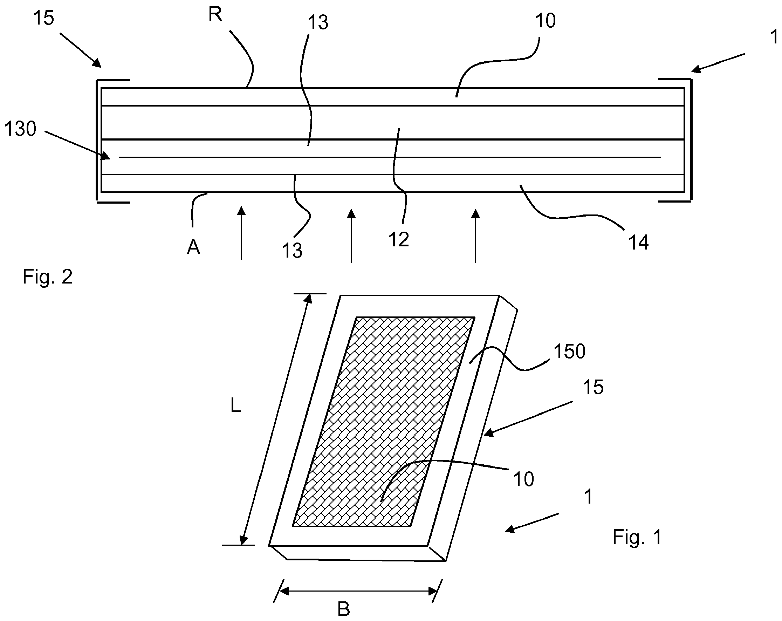

In Figur 1 ist eine schematische perspektivische Ansicht einer Ausführungsform der erfindungsgemäßen Filtereinheit 1 gezeigt. Die Filtereinheit 1 weist einen Rahmen 15 auf. In dem Rahmen 15 sind Filterlagen, von denen in der dargestellten Ausführungsform lediglich eine Decklage 10 zu sehen ist, vorgesehen. Der Rahmen 15 umgreift die Filterlagen an deren Rändern durch Rahmenstege 150, die an der Oberseite und der Unterseite des Rahmens 15 nach innen gerichtet vorgesehen sind. Die Filtereinheit 1 stellt eine flächige Einheit dar und wird auch als Filterkassette bezeichnet. Die Filtereinheit 1 kann in eine Ansaugöffnung einer Dunstabzugshaube (nicht gezeigt) eingebracht werden. Im eingebrachten Zustand stellt in der Regel die Unterseite der Filtereinheit 1 die Anströmseite A und die Oberseite die Reinluftseite R dar.

In Figur 2 ist eine schematische Darstellung des Aufbaus einer Ausführungsform der erfindungsgemäßen Filtereinheit 1 gezeigt. In der dargestellten Ausführungsform weist die Filtereinheit 1 fünf Filterlagen auf. Mit A ist in den Figuren die Anströmseite bezeichnet, über die zu reinigende Luft in die Filtereinheit 1 eintreten kann. An der Anströmseite A ist eine erste Filterlage in dem Rahmen 15 gehalten. Diese Filterlage wird auch als Decklage Anströmseite 14 oder als Sichtlage bezeichnet.

In Strömungsrichtung nach der Decklage Anströmseite 14, das heißt auf dieser, sind in der dargestellten Ausführungsform zwei weitere Filterlagen vorgesehen. Diese Filterlagen sind Maschenlagen 13. Die Maschenlagen 13 bestehen aus mindestens einem Metallfaden (in Figur 2 nicht sichtbar).

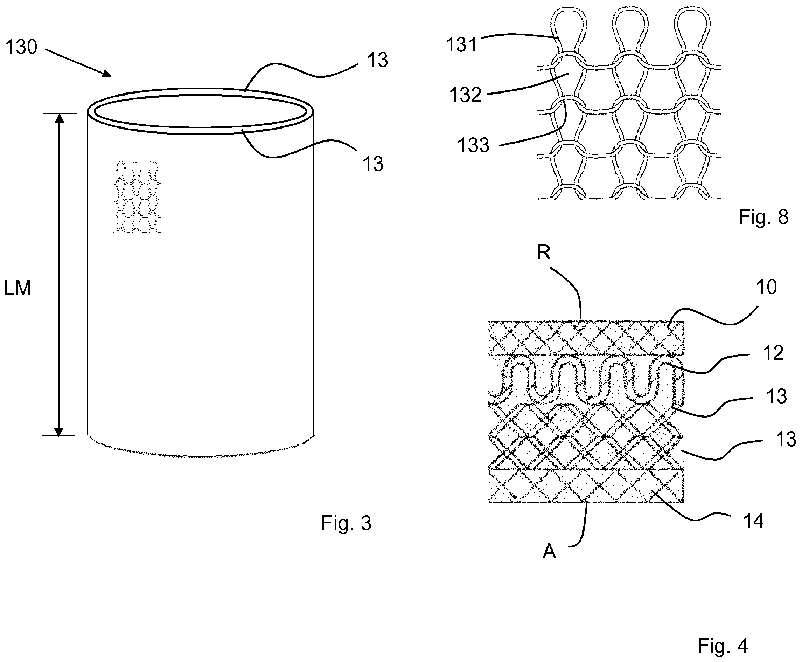

Eine Ausführungsform des Aufbaus der Maschenlage 13 ist in Figur 8 schematisch gezeigt. Hierbei ist zu erkennen, dass der Metallfaden 131, aus dem die Maschenlage 13 gebildet ist, in Schlaufen 132 gelegt ist. Durch das Hindurchführen des Metallfadens 131 durch die Schlaufen 132 entstehen Zwischenräume 133.

Die Maschenlagen 13 sind bei der in Figur 2 gezeigten Ausführungsform durch einen Schlauch 130 hergestellt, das heißt aus diesem geformt. Eine Ausführungsform eines Maschenschlauches 130 ist in Figur 3 schematisch gezeigt. Die in Figur 3 gezeigte Form weist der Maschenschlauch 130 beispielsweise bei dessen Herstellung auf. Bei dem Zusammenbau der Filtereinheit 1 wird eine Länge des so hergestellten Maschenschlauches 130 abgeschnitten, so dass die Länge des Schlauchstücks des Maschenschlauches 130 der Länge der Filtereinheit 1 und insbesondere der inneren Länge des Rahmens 15 entspricht. Die Länge des Schlauchstücks des Maschenschlauches 130 entspricht somit der Länge der Maschenlage LM. Der Maschenschlauch 130 kann dann in den Rahmen 15 eingelegt und in eine ebene Form gebracht werden. Hierdurch entstehen, wie in Figur 2 schematisch angedeutet die zwei Maschenlagen 13, die an deren seitlichen Rändern ineinander übergehen und über deren Flächen aneinander anliegen.

In Strömungsrichtung nach der oberen Maschenlage 13, das heißt auf dieser ist in der Ausführungsform nach Figur 2 eine weitere Filterlage vorgesehen. Die Maschenlage 13 stellt somit eine Innenlage der Filtereinheit 1 dar. Die auf der oberen Maschenlage 13 vorgesehene Filterlage kann beispielsweise eine ondulierte Innenlage 12 aus onduliertem, das heißt gewelltem Streckmetall darstellen. In Strömungsrichtung nach der ondulierten Innenlage 12, das heißt auf dieser ist in der dargestellten Ausführungsform eine weitere Decklage anordnet. Diese Decklage befindet sich an der Reinluftseite R der Filtereinheit 1 und wird daher auch als Decklage Reinluftseite 10 oder Rückseite bezeichnet.

Die Filterlagen 10, 12, 13, 13 und 14 sind an deren Rändern in dem Rahmen 15 gehalten. Insbesondere ragen die Rahmenstege 150 über die Randbereiche der Filterlagen 10, 12, 13, 13 und 14 und halten diese so. Wie sich aus Figur 1 ergibt, sind an allen vier Kanten des Rahmens 15 jeweils Rahmenstege 150 vorgesehen.

In den Figuren 4 bis 7 sind schematische Darstellungen von Reihenfolgen von Filterlagen in weiteren Ausführungsformen der erfindungsgemäßen Filtereinheit 1 gezeigt. Die Filterlagen sind entsprechend den Ausführungsformen nach Figur 1 und 2 vorzugsweise in einem Rahmen (in Figuren 4 bis 7 nicht gezeigt) gehalten.

In der Ausführungsform nach Figur 4 besitzt die Filtereinheit von der Ansaugseite R zu der Reinluftseite R einen Aufbau entsprechend der Ausführungsform nach Figur 2. Allerdings ist in Figur 4 zu erkennen, dass die Decklage Anströmseite 14 und die Decklage Reinluftseite 10 unterschiedlich ausgestaltet sein können, beispielsweise können Streckmetalllagen mit unterschiedlichen Öffnungsgrößen verwendet werden. Weiterhin ist in Figur 4 die ondulierte Innenlage 12 genauer gezeigt.

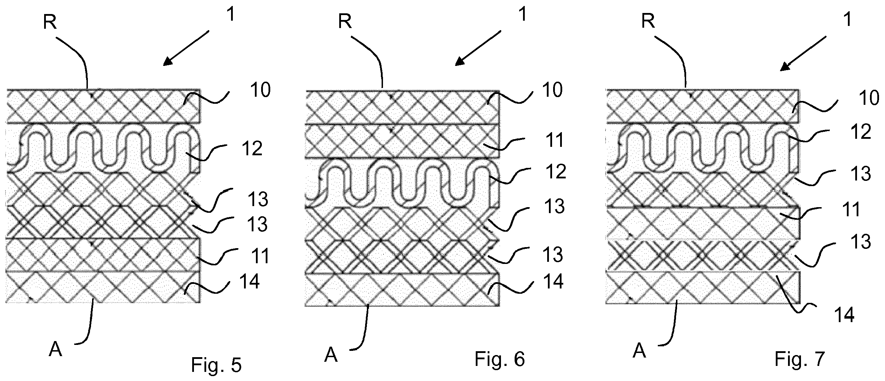

In Figur 5 weist die Filtereinheit 1 von der Ansaugseite R zu der Reinluftseite R einen Aufbau auf, bei dem zusätzlich zu den in der Ausführungsform nach Figur 4 eine weitere Innenlage 11 vorgesehen ist. In der Figur 5 ist die Innenlage 11 hierbei flach ausgestaltet und kann beispielsweise eine Streckmetalllage sein. Die Innenlage 11 ist in Strömungsrichtung vor der ersten Maschenlage 13 und nach der Decklage Anströmseite 14 angeordnet.

Die in der Figur 6 gezeigte Ausführungsform entspricht im Wesentlichen der in Figur 5 gezeigten Ausführungsform. Allerdings ist bei der Ausführungsform der Figur 6 die weitere Innenlage 11 statt auf der Decklage Anströmseite 14 unter der Decklage Reinluftseite 10 vorgesehen. Die Innenlage 11 ist daher in Strömungsrichtung vor der Decklage Reinluftseite 10 und nach der ondulierten Innenlage 11 angeordnet.

In Figur 7 ist eine weitere Ausführungsform gezeigt, die der Ausführungsform nach Figur 5 entspricht, wobei aber die weiter Innenlage 11 zwischen den beiden Maschenlagen 13 angeordnet ist.

Gemäß einer Ausführungsform kann die Filtereinheit beispielsweise den folgenden Aufbau aufweisen:
einer Lage Rückseite: Streckmetall, flach
einer Innenlage Aluminium Streckmetall gewellt
zwei Innenlage Aluminium Streckmetall, gestrickt
einer Sichtlage: Aluminium Streckmetall oder Edelstahlgewebe, flach

Die vorliegende Erfindung ist nicht auf die beschriebenen Beispiele beschränkt. Vielmehr können auch andere Reihenfolgen von Filterlagen realisiert sein. Zudem kann auch die Anzahl der Filterlagen von den in den Figuren gezeigten Anzahlen abweichen. Allerdings sind erfindungsgemäß immer mindestens zwei Maschenlagen 13 vorgesehen. Vorzugsweise sind bei Ausführungsformen, bei denen mehr als zwei Maschenlagen 13 verwendet werden sollen, vorzugsweise vier, sechs oder ein anderes Vielfaches von zwei Maschenlagen 13 vorgesehen, da dadurch die Vorteile genutzt werden können, die zwei Maschenlagen 13 gemeinsam als einen Schlauch herzustellen.

Mit der vorliegenden Erfindung wird eine Filtereinheit geschaffen, die auch als Fettfiltereinheit bezeichnet wird, die gespeicherte Fettmengen nach dem Abschalten der Dunstabzugshaube speichert und nicht in Form von Abtropfen wieder frei gibt.

Somit kann das Problem, das bei bekannten Fettfiltern je nach Anordnung der Fettfilter in der Dunstabzugshaube vorkommen kann, dass das durch den Fettfilter aufgenommene Fett nach dem Ausschalten der Haube aus dem Filter heraus fließt, vermieden werden. Besonders bei Schrägessen ist ein Herausfließen häufig der Fall. Da das Herausfließen aus dem Fettfilter nicht nur durch die Anordnung der Fettfilter in der Dunstabzugshaube bestimmt wird, sondern ebenso durch die Ausführung und den Aufbau der Innenlagen des Fettfilters kann ein Herausfließen bei der erfindungsgemäßen Filtereinheit mit deren besonderen Aufbau besonders zuverlässig verhindert werden.

Bei dem erfindungsgemäßen Filteraufbau werden anstelle von oder zusätzlich zu flachen Innenlagen, die im Stand der Technik verwendet werden, Mascheninnenlagen eingesetzt, die vorzugsweise gestrickte Innenlagen sind. Bei einem effizienten Herstellungsverfahren werden diese immer paarweise, insbesondere durch Herstellen eines Schlauches erzeugt. Durch die Maschenlagen, insbesondere die gestrickten Lagen werden die Eigenschaften des Fettfilters hinsichtlich der Fettabscheidung sowie Speicherkapazität verbessert. Des Weiteren wirkt der Filter bei gleicher Anzahl an Innenlagen haptisch hochwertiger als Filter aus Streckmetallfilter, da die Maschenlagen und insbesondere die gestrickten Lagen dicker aufbauen als die flachen Streckmetalllagen. Die Maschenlagen und insbesondere die gestrickten Innenlagen können entweder in Strömungsrichtung vor oder hinter einer gewellten Innenlage zum Einsatz kommen. Des Weiteren ist auch die Kombination von Maschenlagen und flachen und/oder gewellten Innenlagen, beispielsweise aus Streckmetall bei der erfindungsgemäßen Filtereinheit möglich. Des Weiteren können erfindungsgemäß auch nur Maschenlagen als Filterlagen zum Einsatz kommen.

Mit dem erfindungsgemäßen Fettfilter kann zum einen eine Erhöhung der Fettabscheidung erzielt werden. Zudem kann die Speicherkapazität des Fettfilters erhöht werden. Schließlich ist der Fettfilter haptisch hochwertiger.

### BEZUGZEICHEN

- 1: Filtereinheit
- 10: Decklage Reinluftseite
- 11: Innenlage flach
- 12: Innenlage onduliert
- 13: Maschenlage
- 130: Maschenschlauch
- 131: Metallfaden
- 132: Schlaufe
- 133: Zwischenraum
- 14: Decklage Anströmseite
- 15: Rahmen
- 150: Rahmensteg
- R: Reinluftseite
- A: Anströmseite
- L: Länge Filtereinheit
- B: Breite Filtereinheit
- LM: Länge Maschenlage

## Patentansprüche

1. Filtereinheit für eine Dunstabzugshaube, die mindestens zwei Filterlagen (10, 11, 12, 13, 14) aufweist, **dadurch gekennzeichnet, dass** mindestens zwei der Filterlagen (10, 11, 12, 13, 14) Maschenlagen (13) darstellen, die aus mindestens einem Metallfaden (131) bestehen.

2. Filtereinheit nach Anspruch 1, **dadurch gekennzeichnet, dass** die zwei Maschenlagen (13) aus einem Maschenschlauch (130) geformt sind.

3. Filtereinheit nach einem der Ansprüche 1 oder 2, **dadurch gekennzeichnet, dass** die zwei Maschenlagen (13) aneinander anliegen.

4. Filtereinheit nach einem der Ansprüche 1 bis 3, **dadurch gekennzeichnet, dass** der Metallfaden (131) der Maschenlagen (13) einen abgeflachten Querschnitt aufweist.

5. Filtereinheit nach einem der Ansprüche 1 bis 4, **dadurch gekennzeichnet, dass** die Maschenlagen (13) eine Innenlage darstellt.

6. Filtereinheit nach einem der Ansprüche 1 bis 5, **dadurch gekennzeichnet, dass** der Metallfaden (131) aus Aluminium oder Edelstahl besteht.

7. Filtereinheit nach einem der Ansprüche 1 bis 6, **dadurch gekennzeichnet, dass** die Maschenlage (13) eine Stricklage, Häckellage oder Wirklage ist.

8. Filtereinheit nach einem der Ansprüche 1 bis 7, **dadurch gekennzeichnet, dass** die Filterlagen (10, 11, 12, 13, 14) an deren Rändern in einem Rahmen (15) gehalten sind.

9. Filtereinheit nach einem der Ansprüche 1 bis 8, **dadurch gekennzeichnet, dass** die Filtereinheit (1) mindestens eine Decklage (10, 14), mindestens eine Streckmetalllage (10, 11, 12, 14) und/oder mindestens eine ondulierte Filterlage (12) aufweist.
